**Europäisches Patentamt**

**European Patent Office**

**Office européen des brevets**

(11) Veröffentlichungsnummer: **0 164 567**
**A2**

(12) # EUROPÄISCHE PATENTANMELDUNG

(21) Anmeldenummer: **85105573.1**

(22) Anmeldetag: **07.05.85**

(51) Int. Cl.⁴: **G 01 N 21/07**
**B 01 L 3/14**

(30) Priorität: **11.05.84 CH 2340/84**
**14.08.84 CH 3893/84**

(43) Veröffentlichungstag der Anmeldung:
**18.12.85 Patentblatt 85/51**

(84) Benannte Vertragsstaaten:
**AT BE CH DE FR GB IT LI NL**

(71) Anmelder: **KONTRON-HOLDING AG**
**Bernerstrasse Süd 169**
**CH-8048 Zürich(CH)**

(72) Erfinder: **Degrave, Philippe Louis**
**20 rue du Maréchal Foch**
**F-78220 Viroflay(FR)**

(72) Erfinder: **Trouillet, Jacques**
**38 rue du Vallon**
**F-49000 Angers(FR)**

(74) Vertreter: **Körber, Wolfhart, Dr. et al,**
**Patentanwälte Dipl.-Ing. H. Mitscherlich Dipl.-Ing. K. Gunschmann Dr.rer.nat. W. Körber Dipl.Ing. J. Schmidt-Evers Dipl.-Ing. W. Melzer Steinsdorfstrasse 10 D-8000 München 22(DE)**

(54) **Küvettenanordnung für Zentrifugalanalysensystem.**

(57) Küvettenanordnung für ein Zentrifugalanalysensystem mit Küvetten (2, 3), die in regelmäßigen Abständen als Vertiefungen in einem plattenförmigen Element (1) ausgebildet sind, wobei die Küvetten (2, 3) paarweise gruppiert sind und die zwei Küvetten (2, 3) jedes Paares durch einen Kanal (8) miteinander verbunden sind. Die Anordnung ist vorzugsweise flexibel, z.B. dadurch, daß mehrere langgestreckte Elemente mit ihren Breitseiten aneinandergereiht und durch flexible Bänder (9) zu einer Einheit verbunden sind oder daß die Küvetten (2, 3) in einer flexiblen Kunststoffolie ausgebildet sind. Die spezielle Küvettenform ermöglicht eine durchmischungsfreie Probenübertragung.

EP 0 164 567 A2

./...

**Fig. 1a**

**Fig. 1b**

**Fig. 2**

## Küvettenanordnung für ein Zentrifugalanalysensystem

Die Erfindung betrifft eine Küvettenanordnung für ein Zentrifugalanalysensystem mit einer Anzahl von in einem plattenförmigen Element in regelmässigen Abständen voneinander angeordneten Küvetten, die als Vertiefungen in dem plattenförmigen Element ausgebildet sind.

Bei der vorliegenden Beschreibung wird auf die gleichzeitig hinterlegte Patentanmeldung Nr. 85105145.8 mit dem Titel "Vorrichtung zur Probenüberführung und -analyse mittels Zentrifugierung" Bezug genommen. Die vorliegende Erfindung ist eine für den Einsatz in der dort beschriebenen Vorrichtung besonders geeignete Küvettenanordnung.

Für den Einsatz in sogenannten Zentrifugalanalysensystemen sind Küvettenanordnungen bekannt, bei denen die Küvetten vorzugsweise kreis- oder ringförmig angeordnet sind und zusammen mit einem geeigneten Träger einen Zentrifugenrotor bilden.

Es ist auch bekannt Küvettenanordnungen vorzusehen, bei denen die Küvetten aus in regelmässigen Abständen voneinander angeordneten Vertiefungen in einem plattenförmigen Element, vorzugsweise aus klarem Kunststoff bestehen. Dies sind die sogenannten Mikrotiterplatten. Es ist auch ein Zentrifugalanalysensystem bekannt, in welchem solche Mikrotiterplatten oder diesen Platten

Bu/ 7.3.85

ähnliche Küvettenanordnungen zum Einsatz kommen.

Für die vorstehend erwähnte Vorrichtung zur Proben übertragung und -analyse sind alle diese bekannten Küvettenanordnungen nicht geeignet. Insbesondere ist es nicht möglich bei den Systemen, bei denen auch eine Probenübertragung durch Zentrifugierung stattfindet, diese Uebertragung derart durchzuführen, dass keine Vermischung stattfindet, sondern die vor der Zentrifugierung getrennten Flüssigkeitsmengen auch nach der Uebertragung noch in voneinander getrennten Schichten vorliegen. Dies ist schon deshalb nicht möglich, weil bei den bekannten Zentrifugalanalysensystemen die Uebertragung der Proben und Reagenzien aus einer Kammer in eine andere gerade die Durchmischung herbeiführen soll.

Bei der erwähnten Vorrichtung zur Probenübertragung und -analyse gemäss der gleichzeitigen hinterlegten Patentanmeldung hierfür wird deshalb die Zentrifugierung in zwei Schritten durchgeführt: der erste Schritte bei niedriger Drehzahl und einer gegenüber der Zentrifugierachse schräg gestellten Küvettenanordnung dient der Probenübertragung; eine zweite Phase mit höherer Drehgeschwindigkeit und nunmehr senkrecht zu der Zentrifugierachse stehenden Küvettenachsen dient der eigentlichen Zentrifugierung. Vor allem der Uebertragungsschritt ist kritisch, weil dabei eine Durchmischung vermieden werden muss.

Der Erfindung liegt daher die Aufgabe zugrunde, eine Küvettenanordnung bereitzustellen, mit der eine durchmischungsfreie Probenübertragung durch Zentrifugation möglich ist.

Erfindungsgemäss wird dies erreicht durch eine Küvettenanordnung der eingangs erwähnten Art die sich dadurch auszeichnet, dass die Küvetten paarweise gruppiert sind und je zwei Küvetten jedes Paars dadurch miteinander verbunden sind, dass die Trennfläche zwischen ihnen mindestens teilweise ebenfalls gegenüber der Oberfläche des plattenförmigen Elements vertieft ist.

Insbesondere sind die Küvetten so angeordnet, dass die jeweils zu einem Paar zusammengehörigen Küvetten in Bezug auf die Zentrifugierachse radial hinter-einander liegen. Die der Zentrifugierachse nähere, innere Küvette besteht vorzugsweise aus einer Vertiefung mit einer von ihrem tiefsten Punkt gleichmässig geneigt nach oben verlaufenden rampenförmigen Fläche, die unterhalb der Oberfläche des plattenförmigen Elements in die Seitenwand der äusseren Küvette mündet. Falls zwischen den beiden Küvetten teilweise eine Trennfläche besteht, die durch einen rinnenförmig vertieften Kanal unterbrochen ist, setzt sich die rampenförmige Fläche der inneren Küvette vorzugsweise kontinuierlich im Boden des rinnenförmigen Kanals fort der in die Seitenwand der äusseren Küvette mündet.

Im folgenden werden anhand der beiliegenden Zeichnungen Ausführungsbeispiele der Erfindung beschrieben.

Es zeigen

Figur 1a + b: eine langgestreckte Küvettenanordnung mit einer Reihe von Küvettenpaaren in Aufsicht und Seitenansicht.

Figur 2: eine Küvettenanordnung aus mehreren elastisch miteinander verbundenen Einzelelementen der in Figur 1a gezeigten Form.

Figur 3: einen Schnitt gemäss der Linie III-III in Fig. 2

Figur 4a und b: eine weitere Ausführungsform einer langgestreckten Küvettenanordnung mit einer Reihe von Küvettenpaaren in Aufsicht und Seitenansicht

Figur 5: einen Schnitt nach der Linie V-V in Fig. 4a.

Figur 6a bis d: ein schematisch im Schnitt dargestelltes einzelnes Küvettenpaar nach Fig. 3 in verschiedenen Positionen bei der Zentrifugierung.

Figur 7a-d: ein schematisch im Schnitt dargestelltes einzelnes Küvettenpaar nach Fig. 5 in verschiedenen Positionen bei der Zentrifugierung.

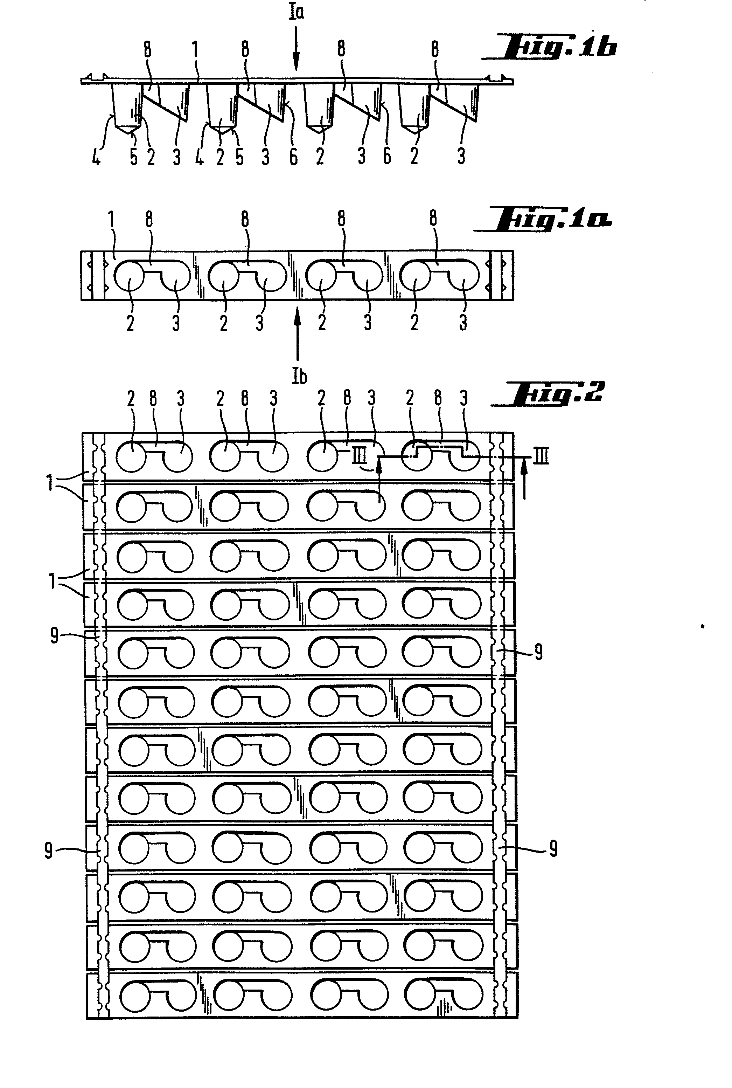

Die in Fig. 1a, 1b gezeigte Küvettenanordnung besteht im wesentlichen aus einer langgestreckten Platte 1, in der sich Küvetten 2,3 in Form von Vertiefungen befinden. Die Küvetten 2, 3 sind jeweils paarweise gruppiert. Jedes Paar besteht aus einer Küvette 2 mit einer im wesentlichen zylindrischen oder schwach konischen Wand 4 und einem konischen Boden 5 und aus einer Küvette 3 mit einer ebenfalls grösstenteils zylindrischen oder schwach konischen Wand 6 und einem zur Küvette 2 hin rampenförmig ansteigenden Boden 7. Die beiden Küvetten eines Paars sind durch einen ebenfalls als Vertiefung in der zwischen den beiden Küvetten 2,3 liegenden Trennfläche der Platte 1 ausgebildeten rinnenförmigen Kanal 8 miteinander verbunden, dessen Boden eine Fortsetzung des rampenförmigen Bodens 7 der Küvette 3 darstellt. Der Kanal 8 mündet in der Seitenwand der Küvette 2.

Wenn die Küvettenanordnung in eine Zentrifuge eingesetzt ist erstreckt sich im Ruhestand der Zentrifuge die langgestreckte Platte im wesentlichen radial zur Zentrifugierachse. Die     Anordnung der Küvettenpaare ist so, dass die Küvette 2 in Bezug auf die Zentrifugierachse jeweils aussen, die Küvette 3 innen ist. Demzufolge werden die beiden Küvetten in der folgenden Beschreibung fallweise als äussere Küvette 2 bzw. innere Küvette 3 bezeichnet.

Die Küvettenanordnung besteht vorzugsweise aus klarem Kunststoff und kann wahlweise entweder durch Tiefziehen oder durch ein Gussverfahren hergestellt sein. Gegossene Küvettenanordnungen haben eine grössere Wandstärke und daher bessere Stabilität und sind vorzuziehen.

Für die Zentrifugierung ist es vorteilhaft eine grössere Zahl von Küvetten in einer Küvettenanordnung vorzusehen. Eine Küvettenanordnung, die ähnlich wie in Figur 1 aufgebaut ist und statt einer einzigen Reihe von Küvettenpaaren deren drei oder vier aufweist, kann in gleiche Weise hergestellt und eingesetzt werden wie die in

5 **0164567**

Figur 1 gezeigte Küvettenanordnung. Allerdings darf nicht übersehen werden, dass bei der Zentrifugierung einer Platte mit vier nebeneinander angeordneten Küvettenreihen die Zentrifugalkraft, die an den beiden äusseren Reihen wirksam ist, grösser ist als die an den beiden inneren Reihen. Dies ist auf den geringfügigen Unterschied der Abstände von der Zentrifugenachse zurückzuführen.

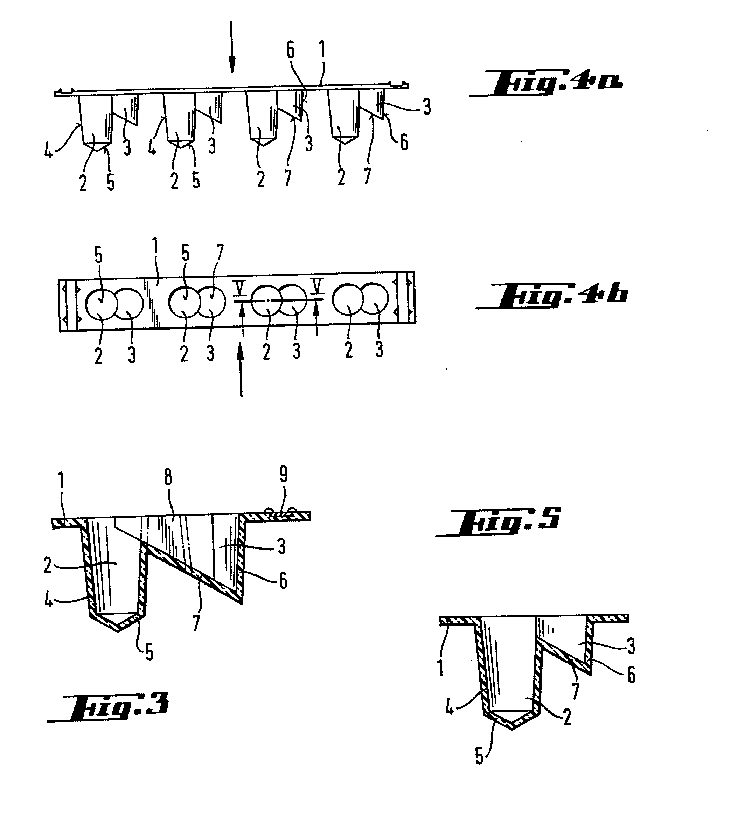

Will man mehr als drei bis vier Reihen von Küvettenpaaren nebeneinander anordnen so muss diesem Fehler Rechnung getragen werden, d.h. die Küvettenanordnung muss so gebogen werden, dass alle Küvettenpaare ungefähr den gleichen Abstand von der Zentrifugierachse haben. Dies ist beispielsweise möglich durch die in Fig. 2 gezeigte Anordnung, bei der die langgestreckten Platten 1 durch flexible Bänder 9 oder dergleichen miteinander so verbunden werden, dass sie sich einer entsprechend gekrümmten Auflage anpassen können. Auf diese Weise können beispielsweise 12 Platten 1 so miteinander verbunden werden, dass sich eine Gesamtanordnung ergibt, die in den Dimensionen den herkömmlichen Mikrotiterplatten entspricht. Dies hat den zusätzlichen Vorteil, dass diese Küvettenanordnungen in Stationen zur Probenvorbereitung behandelt werden können, die auch zur Verarbeitung von Mikrotiterplatten vorgesehen sind.

Eine andere Lösung des Problems der Flexibilität zur Anpassung an die notwendige Krümmung besteht darin, die 4 x 12 Küvettenpaare, die bezüglich der Anordnung und den Dimensionen der herkömmlichen Mikrotiterplatte entsprechen in einem einzigen Element auszubilden, das jedoch dann aus flexibler Folie tiefgezogen sein muss.

6 0164567

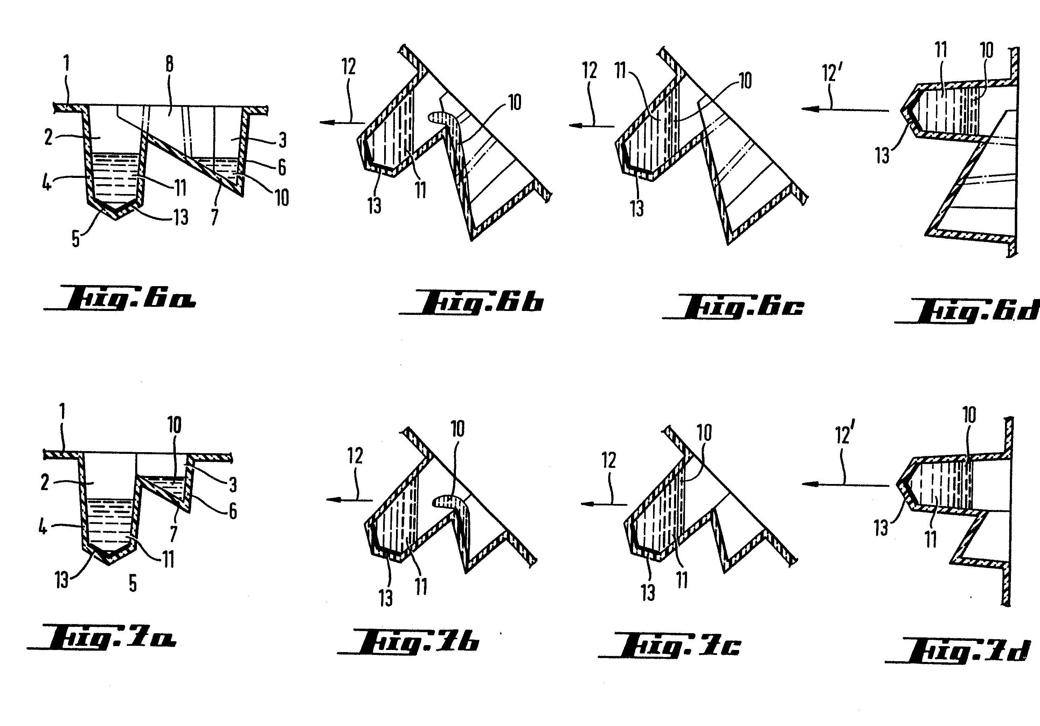

Als Alternative zur Ausbildung der beiden Küvetten 2, 3 mit einem Verbindungskanal 8 ist es auch möglich die beiden zu einem Paar gehörenden Einzelküvetten wie in Fig. 4a, 4b, 5 gezeigt so nah nebeneinander anzuordnen, dass sich ihre Wandflächen verschneiden und sich dadurch die Verbindung zwischen den beiden Küvetten ergibt. Diese Version hat den Vorteil eines einfacheren Aufbaus.

Wie in Figur 1a ersichtlich, ist der Verbindungskanal 8 mit Vorteil nicht symmetrisch zwischen den beiden Küvetten eines Paars angeordnet, sondern sozusagen tangential. Dies hat zum Zweck, dass der nachstehend zu beschreibende Probentransfer weicher erfolgt. Die Bedeutung dieses Umstandes wird aus der folgenden Funktionsbeschreibung klar.

Das Funktionsprinzip der erfindungsgemässen Küvettenanordnung ist aus den Fig. 6a-d und 7a-d ersichtlich, in denen ein einzelnes Küvettenpaar schematisch im Schnitt dargestellt ist. Fig. 6a, 7a zeigen das Küvettenpaar, wenn die Küvettenanordnung sich in horizontalen Position befindet. Diese Lage hat die Küvettenanordnung während der Probenvorbereitung, bei der in der inneren Küvette 3 ein Gemisch aus Proben und Reagenzien hergestellt und inkubiert wird. In die äussere Küvette 2, deren Boden 5 mit einer Schicht 13 aus Protein, beispielsweise Immunglobulin beschichtet ist, wird ein Filter- bzw. Reinigungsmittel 11 für den in der Proben/Reagenzien-Mischung 10 enthaltenen Antigen/Antikörper-Komplex eingefüllt. In der durch die Figur 6a, 7a angedeuteten waagrechten Lage wird die gefüllte und inkubierte Küvettenanordnung auch in die Zentrifuge eingebracht.

Für die Probenübertragung wird durch Zentrifugierung mit einer bestimmten Drehgeschwindigkeit und gegebenenfalls Arretierung des Küvettenträgers bei einem bestimmten Winkel von beispielsweise 45$^{\circ}$ die Küvettenanordnung um diesen Winkel schräggestellt. Dies ist in den Fig. 6b, 7b und 6c, 7c gezeigt. Bei dieser Zentrifugierung greift die durch den Pfeil 12 angedeutete Zentrifugalkraft an den in den Küvetten enthaltenen Flüssigkeiten an, was dazu führt, dass das Proben/Reagenzien-Gemisch 10 in die äussere Küvette 2 strömt. Die Strömungsgeschwindigkeit hängt von dem Verhältnis des Winkels der rampenförmigen Bodenfläche der Küvette 3 zu dem Winkel, um den die Küvettenanordnung schräg gestellt wird ab. Wenn die Differenz zwischen diesen beiden Winkeln etwa 10$^{\circ}$ beträgt ist eine weiche Probenübertragung ohne Turbulenz gewährleistet.

Fig. 6c, 7c zeigen die Situation, wenn der Inhalt der inneren Küvette 3 vollständig in die äussere Küvette 2 übetragen ist. Das Proben/Reagenzien-Gemisch 10 befindet sich als Schicht über der Filterschicht 11.

Durch Lösen der Arretierung (nicht dargestellt) und Steigerung der Zentrifugationsgeschwindigkeit, dargestellt durch einen längeren Pfeil 12' in Fig. 3d, wird die Küvettenanordnung senkrecht gestellt, sodass die Achse der äusseren Küvette 2 nunmehr radial zur Zentrifugierachse verläuft. Die Proben/Reagenzien-Schicht befindet sich anfangs noch klar getrennt von der Reinigungsschicht 11. Durch die Zentrifugierung ergibt sich jetzt jedoch ein derart hohe Zentrifugalbeschleunigung, dass die Antigen/Antikörper-Komplexe aus der Proben/Reagenzien-Schicht 10 durch die Reinigungsschicht 11 diffundieren. Beim Durchgang durch die Reinigungsschicht 11 werden die ungebundenen Antikörper zurückgehalten, sodass diese nicht wie bei der anderen bekannten Methode durch Waschen beseitigt werden müssen. Nach dem Durchgang durch die Reinigungsschicht gelangen die Antigen/Antikörperkomplexe zu der Proteinschicht 13 und lagern sich dort an.

Je nachdem, ob die vorgängige Reaktion positiv oder negativ war, ergeben sich stärkere oder kleinere Bindungskräfte an der Proteinschicht. Durch Erhöhung der Zentrifugiergeschwindigkeit kann zwischen schwacher oder starker Bindung und damit zwischen negativer und positiver Reaktion differenziert werden. Bei schwacher Bindung infolge negativer Reaktion lösen sich die Antigen/Antikörper-Komplexe bei einer Zentrifugalbeschleunigung von beispielsweise 5-8g bereits ab und sammeln sich in der Mitte des konkaven Bodens, wo sie einen lichtundurchlässigen Fleck bilden. Die starke Bindung infolge einer positiven Reaktion hält hingegen bis zu Zentrifugalbeschleunigungen von über 20g.

Als Kontrollmassnahme kann die Zentrifugiergeschwindigkeit noch weiter erhöht werden, bis sich bei etwa 30g auch die stärker gebundenen Komplexe lösen.

In der Position, die in Figuren 6d, 7d gezeigt ist, findet auch die Ablesung der Reaktionsergebnisses statt. Zu diesem Zweck wird mit Hilfe einer optischen Einrichtung die Lichtdurchlässigkeit des Bodens 5 abgetastet. Je nachdem ob eine Anlagerung stattgefunden hat bzw. der Zentrifugation standhält oder nicht, ergeben sich Unterschiede in der Lichtdurchlässigkeit, die für das Ergebnis der Reaktion typisch sind.

## Patentansprüche

1. Küvettenanordnung für ein Zentrifugalanalysensystem mit einer Anzahl von in einem plattenförmigen Element in regelmässigen Abständen voneinander angeordneten Küvetten, die als Vertiefungen in dem plattenförmigen Element ausgebildet sind, dadurch gekennzeichnet, dass die Küvetten (2,3) paarweise gruppiert sind und die zwei Küvetten jedes Paars dadurch miteinander verbunden sind, dass die Trennfläche zwischen ihnen mindestens teilweise ebenfalls gegenüber der Oberfläche des plattenförmigen Elements vertieft ist.

2. Küvettenanordnung nach Anspruch 1, dadurch gekennzeichnet, dass mehrere längs aneinandergereihte Paare in einem langgestreckten plattenförmigen Element (1) ausgebildet sind.

3. Küvettenanordnung nach Anspruch 2, dadurch gekennzeichnet, dass mehrere langgestreckte Elemente mit ihren Breitseiten aneinandergereiht und durch flexible Bänder (9) zu einer Einheit verbunden sind.

4. Küvettenanordnung nach Anspruch 1, dadurch gekennzeichnet, dass die Küvetten in einer flexiblen Kunststofffolie ausgebildet sind.

5. Küvettenanordnung nach einem der Ansprüche 1 bis 4, dadurch gekennzeichnet, dass die Trennfläche einen vertieften Verbindungskanal (8) zwischen den beiden Küvetten eines Paars aufweist.

6. Küvettenanordnung nach Anspruch 5, dadurch gekennzeichnet, dass der Verbindungskanal tangential am Küvettenpaar angeordnet ist.

7. Küvettenanordnung nach Anspruch 1, dadurch gekennzeichnet, dass die jeweils zu einem Paar zusammengehörigen Küvetten in Bezug auf die Zentrifugierachse radial hinter-einander liegen.

8. Küvettenanordnung nach Anspruch 7, dadurch gekennzeichnet, dass die der Zentrifugierachse nähere, innere Küvette (3) aus einer Vertiefung mit einer von ihrem tiefsten Punkt gleichmässig geneigt nach oben verlaufenden rampenförmigen Fläche ist, die unterhalb der Oberfläche des plattenförmigen Elements (1) in die Seitenwand der äusseren Küvette (2) mündet.

9. Küvettenanordnung nach den Ansprüchen 5 und 8, dadurch gekennzeichnet, dass sich die rampenförmige Fläche der inneren Küvette kontinuierlich im Boden des Kanals (8) festsetzt.

***

**Fig. 1b**

**Fig. 1a**

**Fig. 2**

Fig.4a

Fig.4b

Fig.5

Fig.3

Fig.6a

Fig.6b

Fig.6c

Fig.6d

Fig.7a

Fig.7b

Fig.7c

Fig.7d

3/3

0164567